# EUROPEAN PATENT APPLICATION

(11) **EP 4 624 321 A1**
(43) Date of publication of application: **01.10.2025**
(21) Application number: 25158455.3
(22) Date of filing: 18.02.2025
(51) Int. Cl.: B64C 1/14, B64D 45/00, E05B 9/00, E05B 83/36, B64D 11/02

(54) **BARRIER DOOR WITH HINGED LOCK**

(30) Priority: 28.03.2024 US 202418619470
(71) Applicant: The Boeing Company, Arlington, VA 22202 (US); Harper Engineering Company, Renton, Washington 98057 (US)
(72) Inventor: RHYNARD, Steven Ellis, ARLINGTON, 22202 (US); NUNES, Daniel Bryan, ARLINGTON, 22202 (US); KIRIAKOS, Emad Said, ARLINGTON, 22202 (US); SMITH, Gregory Staton, ARLINGTON, 22202 (US); LACONTE, Rich J., RENTON, 98057 (US); CHADWELL, David Lee, RENTON, 98057 (US)
(74) Representative: Plasseraud IP

(57) **Abstract**

A lock for a multiple panel door. The lock includes a strike section configured to be mounted to a first panel and with the strike section having a receptacle. A latch section is configured to be mounted to a second panel and with the latch section having a bolt selectively movable between an unlocked position that is away from the receptacle and a locked position that is positioned in the receptacle. A hinge pivotally connects the strike section and the latch section. The strike section and the latch section are selectively movable about the hinge to enable relative pivoting movement between the first panel and the second panel.

## Description

### TECHNOLOGICAL FIELD

The present disclosure relates generally to the field of aircraft and, more specifically, to a barrier door with a hinged lock to enable the barrier door to fold in a stowed position.

### BACKGROUND

Aircraft have a flight deck that includes flight instruments, instrument panels, and various controls that enable the flight crew to operate the aircraft. The flight deck is positioned towards the front of the aircraft and is usually a separate compartment away from the cabin area. A flight deck door further secures the flight deck and when closed isolates the flight deck from the cabin area.

The flight deck door is closed and locked during flight. This allows the flight crew to concentrate on operating the aircraft and prevents entry of unauthorized persons onto the flight deck. However, the flight deck door may be opened during flight for various reasons. One occurrence is when one of the flight crew use the lavatory which is located in the cabin area of the aircraft. Other occurrences include but are not limited to when food and/or drinks that are prepared in the galley of the cabin area are delivered to the flight crew on the flight deck, and when flight crew leave the flight deck during a break.

Opening of the flight deck door could present an opportunity for an un-authorized person to gain entry to the flight deck. A physically installed system is needed that would inhibit and/or sufficiently delay a person in the cabin area from reaching the flight deck door when the flight deck door is open. The delay in their movement towards the flight deck would allow the flight deck door to be closed and locked prior to the person reaching the door.

### SUMMARY

One aspect is directed to a lock for a multiple panel door with a first panel and a second panel that are pivotally connected together. The lock comprises a strike section configured to be mounted to the first panel with the strike section comprising a receptacle. A latch section is configured to be mounted to the second panel with the latch section comprising a bolt selectively movable between an unlocked position that is away from the receptacle and a locked position that is positioned in the receptacle. A hinge pivotally connects the strike section and the latch section. Wherein the strike section and the latch section are selectively movable about the hinge to enable relative pivoting movement between the first panel and the second panel.

In another aspect, the strike section and the latch section are relatively movable between a closed position and an open position with the closed position comprising the strike section and the latch section aligned in a coplanar orientation and the open position comprising the strike section and the latch section aligned at a transverse orientation.

In another aspect, each of the strike section and the latch section comprise a face and wherein the faces are positioned together in a closed position and the faces are spaced apart in an open position. In some examples, the strike section and the latch section are relatively movable between a closed position and an open position, each of the strike section and the latch section comprise a respective inner face, the inner face of the strike section and the inner face of the latch section are configured to face together in the closed position, and the inner face of the strike section and the inner face of the latch section are configured to be spaced apart in the open position.

In another aspect, the latch section comprises a bolt and in the closed position the bolt is configured to extend outward from the (inner) face of the latch section.

In another aspect, a handle is positioned on the latch section with the handle movable relative to a body of the latch section and configured to control the position of the bolt.

In another aspect, the handle comprises a front handle and a rear handle with the front handle exposed on a front side of the latch section and the rear handle exposed on a rear side of the latch section.

In another aspect, the hinge is configured to enable the strike section to pivot (in one direction) relative to the latch section forward of the latch section and to prevent the strike section to pivot (in another direction, relative to the latch section) rearward of the latch section.

In another aspect, the lock comprises a first side that faces outward from the door in a first direction and a second side that faces outward from the door in an opposing second direction, wherein the hinge is mounted on the first side of the lock and configured to be accessible from the first side and inaccessible from the second side when the door is in a closed position (extended configuration).

In another aspect, the lock is configured to be mounted within an aircraft.

One aspect is directed to a lock for a multiple panel door with a first panel and a second panel that are pivotally connected together. The lock comprises a strike section configured to be mounted to the first panel and a latch section configured to be mounted to the second panel. Each of the strike section and the latch section comprise a body with a front side, a rear side, and a face (e.g., inner face) that extends between the front side and the rear side. A receptacle extends into the face of the strike section. A handle and bolt are mounted to the latch section. A hinge is connected to the strike section and the latch section. The strike section and the latch section are selectively movable about the hinge between a closed position and an open position. The closed position comprises the faces of the strike section and the latch section facing together to enable the bolt to extend into the receptacle to lock the lock. The open position comprises the faces of the strike section and the latch section facing away from each other.

In another aspect, the hinge is configured to enable relative pivoting movement between the first panel and the second panel.

In another aspect, the hinge is positioned at the front side of each of the strike section and the latch section.

In another aspect, the hinge is a piano hinge.

In another aspect, the faces (e.g., inner faces) of the strike section and the latch section abut together in the closed position.

In another aspect, the hinge has a straight shape. In some examples, the panel door comprising a door hinge configured to pivot the first panel and the second panel, and the door hinge and the hinge of the lock are aligned to form a straight line.

In another aspect, each of the strike section and the latch section comprise a body with the body of the strike section configured to fit within the first panel and the body of the latch section configured to fit within the second panel.

In another aspect, the handle comprises a first handle positioned on the front side of the latch section and a second handle positioned on a rear side of the latch section with the bolt positioned between the first handle and the second handle.

One aspect is directed to a method of operating a door. The method comprises: engaging a lock and locking the door in an extended configuration across an opening with a latch section of the lock on a second panel of the door and a strike section of the lock on a first panel of the door; disengaging the lock and pivoting the first panel relative to the second panel and pivoting the latch section relative to the strike section; and folding the door to a folded configuration with the first panel and the latch section folded with the second panel and the strike section.

In another aspect, the method further comprises positioning the door in the folded configuration along one edge of the opening.

In another aspect, disengaging the lock comprises turning a handle on the latch section and rotating a bolt out of a receptacle in the strike section.

In another aspect, the method further comprises aligning the strike section and the latch section in a coplanar orientation with the door in the extended configuration.

In another aspect, the method further comprises rotating a handle on the latch section and moving a bolt of the latch section into a receptacle in the strike section.

In another aspect, the method further comprises positioning a hinge of the lock on a front side of the door with the door in the extended position.

In another aspect, the method further comprises positioning the door across the opening in a cabin area of an aircraft.

In another aspect, the method further comprises positioning the door away from the opening and enabling passengers of an aircraft to move through the opening.

One aspect is directed to a method of operating a door. The method comprises: unfolding a first panel and a second panel of the door and unfolding a lock that comprises a first section (e.g., strike section) attached to the first panel and a second section (e.g., latch section) attached to the second panel; extending the door across an opening and aligning the first section and the second section of the lock in an extended configuration; locking the lock while in the extended configuration and preventing the door from being folded; unlocking the lock and folding the first panel and the second panel out of the opening; and folding the lock while simultaneously folding the first panel and the second panel.

In another aspect, the method further comprises extending the door across the opening and aligning the first section and the second section of the lock in a coplanar orientation.

In another aspect, the method further comprises moving the door out of the opening and aligning the first section and the second section of the lock in a transverse orientation.

In another aspect, the method further comprises rotating a handle on the second section of the lock and engaging a bolt with the first section and locking the lock.

In another aspect, the method further comprises folding the door and simultaneously pivoting the first panel and the second panel about a panel hinge and the first section and the second section about a lock hinge with the panel hinge and the lock hinge aligned in a straight line.

One aspect is directed to a door assembly configured to be mounted in an opening within an interior of an aircraft. The door assembly comprises a frame, a door mounted in the frame and comprising a first panel and a second panel; and a lock. The lock comprises a strike section configured to be mounted to the first panel with the strike section comprising a receptacle, a latch section configured to be mounted to the second panel with the latch section comprising a bolt selectively movable between an unlocked position that is away from the receptacle and a locked position that is positioned in the receptacle, and a hinge that pivotally connects the strike section and the latch section. The strike section and the latch section are selectively movable about the hinge to enable relative pivoting movement between the first panel and the second panel.

In another aspect, the frame extends completely around the door.

In another aspect, the door comprises a front side and a back side (e.g., rear side) and wherein the hinge is positioned on the front side.

In another aspect, the door is movable between a folded configuration with the strike section and the latch section folded together about the hinge and an extended configuration with the strike section and the latch section aligned in a plane.

In another aspect, each of the strike section and the latch section comprise a face and wherein the faces are positioned together in a closed position and the faces are spaced apart in an open position.

In another aspect, the door assembly is mounted in an opening within an interior of an aircraft.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an example aircraft.
Figure 2 is a top schematic view of an example barrier door mounted in an opening.
Figure 3A is an isometric view of an example barrier door in an open position and folded within a frame.
Figure 3B is an isometric view of the barrier door of Figure 3A in a partially closed position and extending partially across the opening.
Figure 3C is an isometric view of the barrier door of Figure 3A in a closed position and extending fully across the opening.
Figure 4A is a front view of an example lock in a closed position.
Figure 4B is a rear view of the lock of Figure 4A in the closed position.
Figure 5A is an isometric front view of the lock of Figure 4A in an open position.
Figure 5B is an isometric rear view of the lock of Figure 4A in an open position.
Figure 6 is a flowchart diagram of an example method of operating a barrier door.
Figure 7 is a flowchart diagram of an example method of operating a barrier door.
Figure 8A is a schematic diagram of an example engagement member in a disengaged position.
Figure 8B is a schematic diagram of the engagement member of Figure 8A in an engaged position.
Figure 9A is a schematic side view of an example engagement member in a disengaged position.
Figure 9B is a schematic side view of the engagement member of Figure 9A in an engaged position.
Figure 10 is a side view of an example cam member connected in an overlapping arrangement to a rotary bolt.
Figure 11A is a side view of an example lock bar assembly in a first position that prevents rotation of the cam member.
Figure 11B is a side view of the lock bar assembly of Figure 11A in a second position that enables rotation of the cam member.
Figure 12 is a schematic section view of an example damper.
Figures 13A-13C are side views of an example lock bar assembly and delay assembly in different positions to control the positioning of the frame.
Figure 14 is a side view of an example catch that engages with an example delay assembly.
Figure 15 is an enlarged partial side view of the catch of Figure 14.
Figure 16 is a side view of an example catch in an unlocked position to enable a frame of a lock bar assembly to move downward.
Figure 17 is a side view of the catch of Figure 16 now in a locked position in contact with the frame of the lock bar assembly.
Figure 18 is a partial cut-away view of example fasteners mounted to a strike section of a lock.
Figure 19 is a schematic diagram of an example door assembly mounted in an opening.

### DETAILED DESCRIPTION

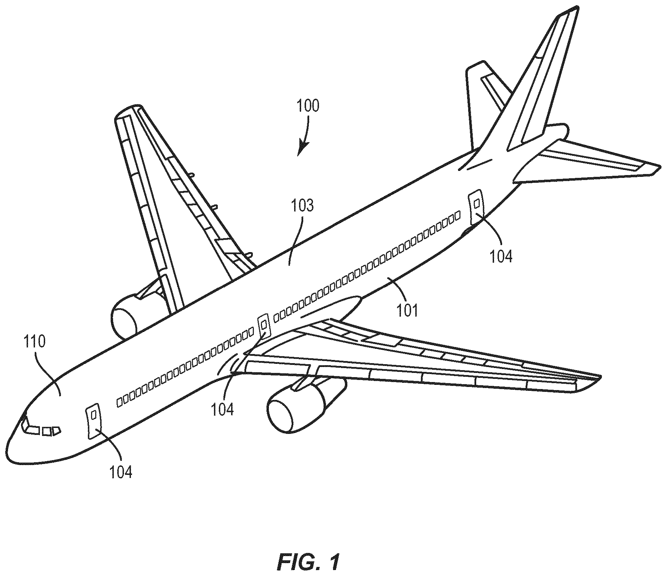

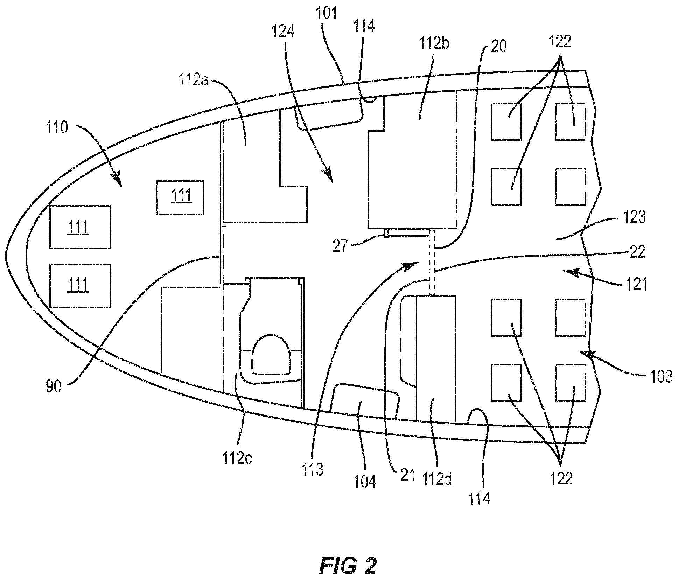

Figures 1 and 2 illustrate an example aircraft 100 configured to transport passengers. The aircraft 100 includes a fuselage 101 with a flight deck 110 positioned at the front and a cabin area 103 positioned rearward. The cabin area 103 is equipped for accommodating the passengers. The size of the flight deck 110 and the cabin area 103 can vary depending upon the aircraft 100. One or more exterior doors 104 provide for passengers and the flight crew to enter and exit the fuselage 101.

The flight deck 110 includes one or more seats 111 for flight crew including but not limited to the pilot and co-pilot. Various controls and instrument panels (not illustrated) are located for use by the flight crew to control the aircraft 100. A flight deck door 90 separates the flight deck 110 from the cabin area 103. The flight deck door 90 prevents unauthorized persons from entering the flight deck 110 from the cabin area 103. The flight deck door 90 can include a lock to secure the door 90 in the closed position.

Monuments 112 are mounted to the structural members of the aircraft 100 within the fuselage 101. The monuments 112 are shaped and sized for a function with examples including but not limited to galleys, lavatories, walls, and stowage units. In some examples, the monuments 112 are shaped and sized to extend from the floor to the ceiling of the cabin area 103, and between a wall 114 of the fuselage 101 to an aisle 123.

The cabin area 103 is positioned along the fuselage 101 rearward of the flight deck 110. The cabin area 103 includes a crew section 124 and a passenger section 121. The crew section 124 is positioned immediately aft of the flight deck 110. In some examples, the crew section 124 is positioned at one of the exterior doors 104 and includes space to allow for passengers to enter and exit the aircraft 100. Additionally or alternatively, the crew section 124 provides an area for the flight crew such as flight attendants to sit during takeoff and landing, for the flight crew to prepare food/drinks, and for passengers to access a lavatory. Figure 2 includes the crew section 124 having a pair of galley monuments 112a, 112b, a lavatory monument 112c, and a stowage monument 112d.

In the example of Figure 2, the passenger section 121 is positioned aft of the crew section 124. The passenger section 121 is configured to accommodate the passengers and includes seats 122 arranged in rows along one or more aisles 123. In some examples such as a commercial airline, the seats 122 extend throughout the passenger section 121.

The cabin area 103 can include a wide variety of configurations. In some examples the aircraft 100 is used to transport cargo and includes a limited number of seats 122 in the cabin area 103. In some examples the cabin area 103 does not include a crew section 124 with the passenger section 121 including the seats 122 extending directly behind the flight deck 110.

One or more openings 113 form walkways for passengers and flight crew to move within the cabin area 103. In some examples as illustrated in Figure 2, the openings 113 are formed between the monuments 112. Figure 2 illustrates a layout with an opening 113 that extends between the crew section 124 and the passenger section 121. Other examples include openings 113 formed between various components, such as monuments 112, walls 114, and seats 122.

A barrier door 20 (also referred to as panel door 20) extends across the opening 113 to delay and/or prevent a passenger in the passenger section 121 from moving through an opening 113 and gaining access to the flight deck 110. The barrier door 20 is movable between a stowed position (shown in solid lines in Figure 2) and a deployed position across the opening 113 (shown in dashed lines in Figure 2). In the stowed position, the barrier door 20 is folded and positioned in a frame 27. This allows for persons to move through the opening 113 such as during boarding and deplaning. In the deployed position, the barrier door 20 is in an extended configuration that extends across the opening 113. This prevents and/or delays a person in the passenger section 121 from moving through the opening 113 and gaining access to the flight deck 110.

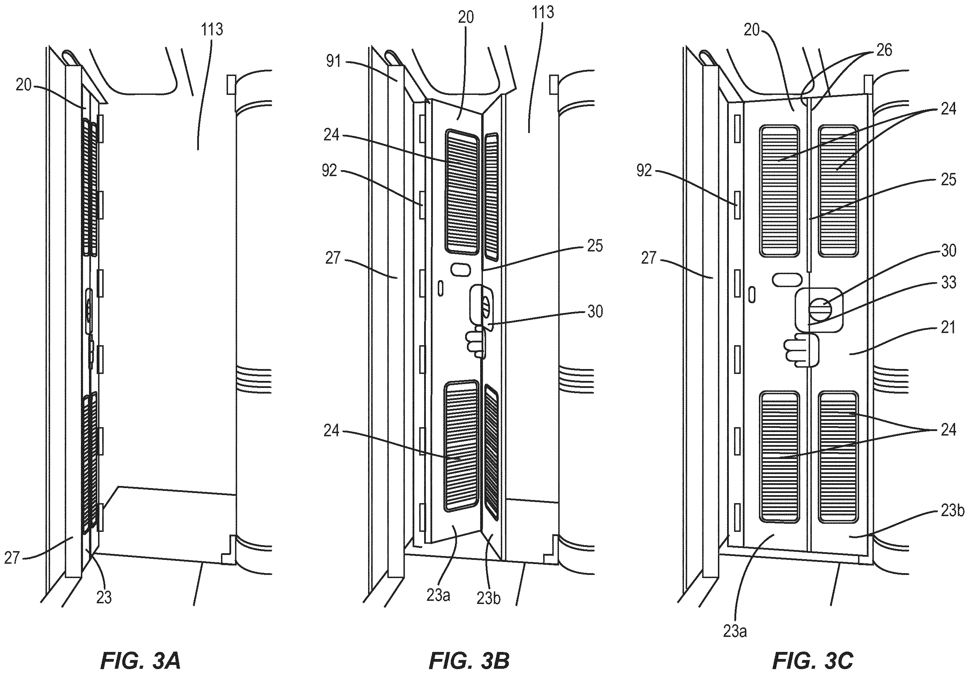

The barrier door 20 is constructed from panels 23 that are hingedly connected together. The number and configuration of the panels 23 can vary. For example, the panels 23 may be formed from a first panel 23a and a second panel 23b. Figures 3A, 3B, and 3C illustrate the barrier door 20 moving from a stowed position (Figure 3A), to a partially deployed position (Figure 3B) to a deployed position (Figure 3C). In the stowed position (Figure 3A) the panels 23 are folded together and out of the opening 113. The panels 23 may be completely out of the opening 113 such as within a frame 27 or folded and stored at one side of the opening 113. In the deployed position (Figure 3C), the panels 23 are unfolded to extend across the opening 113.

The panels 23 are constructed from a rigid material (e.g., composite material, plastic) and have a fixed shape. The panels 23 can include various shapes and sizes including substantially rectangular as shown. In some examples as illustrated in Figure 3C, the panels 23 are sized to extend across the entire opening 113 such that there are no gaps when in the deployed position. In other examples, one or more small gaps are formed along the outer edges of the panels 23. In some examples, the panels 23 have the same shape and size to completely overlap in the folded configuration. In other examples the panels 23 include different shapes and/or sizes. One or more windows 24 can be positioned on one or both panels 23. The windows 24 include bars, protective transparent material, or other structures to prevent a passenger from crawling through when the barrier door 20 is closed.

The barrier door 20 includes one or more hinges 25 (also referred to as door hinge(s) 25, or panel hinge(s) 25) to enable pivoting movement of the panels 23 (e.g., pivoting movement of the first panel 23a and the second panel 23b). In the example best shown in Figures 3B and 3C, the panels 23 are connected by a hinge 25 that is positioned at the inner edges 26. The hinge 25 can extend along a single continuous section of the inner edges 26 or can include two or more discrete sections. In some examples, the hinge 25 provides for the panels 23 to be parallel in the folded configuration. This minimizes the overall size of the barrier door 20 when in the stowed position to provide for persons to pass through the opening 113. In some examples, the hinge 25 aligns the panels 23 in a co-linear position in the extended configuration to extend across the opening 113. In other examples the panels 23 are positioned at different relative angular positions in the folded and extended configurations. The hinge 25 can include various configurations, including but not limited to a piano hinge.

In the deployed position, the barrier door 20 includes a front side 21 (i.e., crew side) that faces forward into the crew section 124 and towards the flight deck 110. The barrier door 20 also includes a rear side 22 (i.e., passenger side) that faces rearward towards the passenger section 121 (see Figure 2). The barrier door 20 is mounted to the frame 27 by one or more frame hinges 92. In some examples, the frame hinge 92 and one or more hinges 25 are positioned on the front side 21 of the barrier door 20 (i.e., in the crew section 124). This allows the barrier door 20 to more effectively resist loads applied from the passenger section 121 toward the flight deck 110.

The barrier door 20 includes a lock 30 that secures the panels 23 (for example, the first panel 23a and the second panel 23b) in the extended configuration when deployed across the opening 113. As illustrated in Figure 3C, the lock 30 is positioned on two adjacent panels 23. The lock 30 includes a hinged design to enable pivoting movement of the panels 23 when moving between the folded and extended configurations. The lock 30 includes a hinge 33 (also referred to as lock hinge 33) that is aligned with the hinge 25 of the barrier door 20. The hinge 33 enables the lock 30 to move the barrier door 20 between folded and unfolded configurations. This enables the lock 30 to pivot during movement of the barrier door 20.

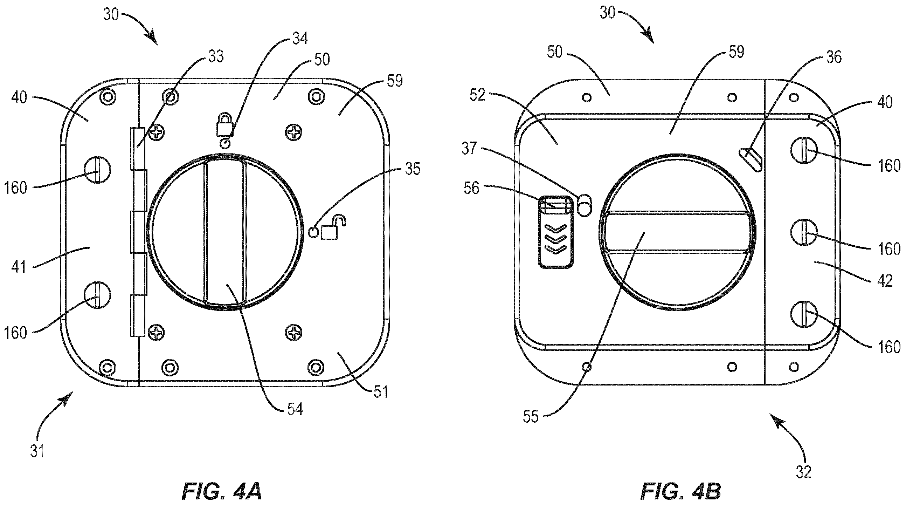

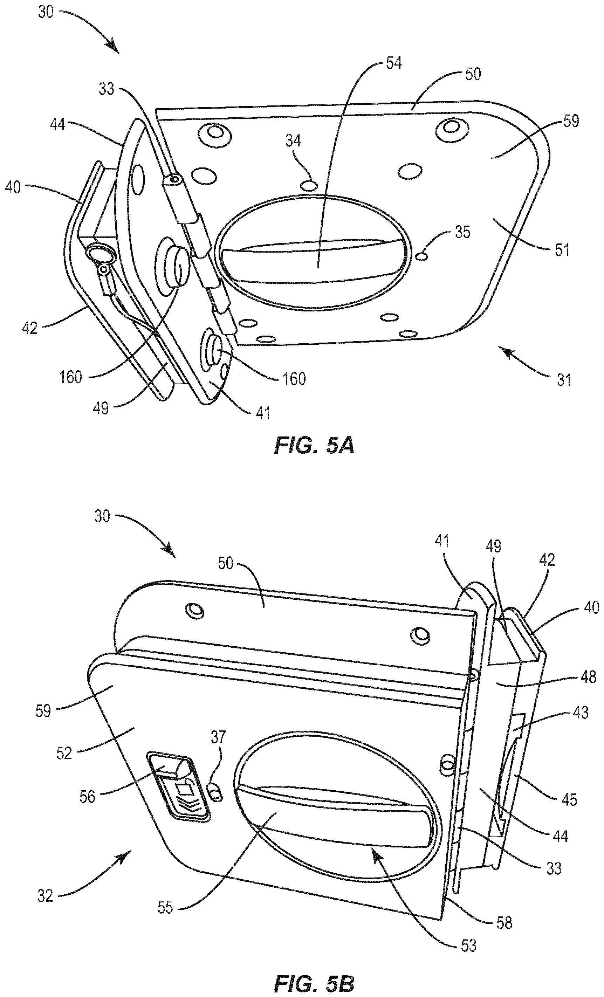

The lock 30 includes a first section and a second section that are pivotally connected together to enable folding. As illustrated in Figures 4A, 4B, 5A, and 5B, the lock 30 includes a strike section 40 and a latch section 50. The hinge 33 is connected to and enables the pivoting movement between the strike section 40 and the latch section 50. When the lock 30 is mounted to the barrier door 20, the strike section 40 is connected to a first panel 23 (for example, the first panel 23a) and the latch section 50 is connected to a second panel 23 (for example, the second panel 23b). The hinge 33 is aligned with the hinge 25 that connects the first and second panels 23. In some examples, the hinges 25, 33 are aligned in a straight line. That is, the hinge 25 and the hinge 33 have a straight shape or configuration, so their alignment forms a straight line. In some examples, the hinge 33 is configured to enable the strike section 40 to pivot (in one direction) relative to the latch section 50 forward of the latch section 50 and to prevent the strike section 40 to pivot (in another direction, relative to the latch section 50) rearward of the latch section 50. That is, the hinge 33 is configured to allow the strike section 40 to pivot relative to the latch section 50 in a forward direction, while preventing rearward pivoting. This directional control maintains the structural integrity and security of the lock 30 when the barrier door 20 is in its extended configuration. By restricting rearward movement, the hinge 33 ensures that any force applied from the passenger side of the barrier door 20 does not compromise the lock's engagement, thereby enhancing the barrier door's 20 ability to resist unauthorized access. In some examples, the forward direction of pivoting movement between the strike section 40 and the latch section 50 refers to the pivoting movement of the strike section 40 towards the front side 21 of the barrier door 20 (panel 23), which is typically oriented towards the crew section 124 or flight deck 110. Conversely, the restricted rearward movement may refer to the pivoting movement of the strike section 40 towards the rear side 22 of the barrier door 20 (panel 23), which is typically oriented towards the passenger section 121. In some examples, where the barrier door 20 comprises two panels 23, the hinge 33 (and typically the hinge 25 of the barrier door 20) enables the front sides 21 of each panel 23 to pivot (rotate) together from the unfolded (extended) configuration to the folded configuration of the barrier door 20.

In some examples, the lock 30 comprises a first side (for example, the first side may refer to a front side 31 described hereinafter) that faces outward from the barrier door 20 in a first direction (e.g., direction that faces the crew section 124 when implemented into the aircraft), and a second side (for example, the second side may refer to a rear side 32 described hereinafter) that faces outward from the panel door (20) in an opposing second direction (e.g., direction that faces the passenger section 121 when implemented into the aircraft). For example, Figure 4A illustrates the front side 31 (i.e., cabin side that faces into the crew section 124) of the lock 30 in a closed position and Figure 4B illustrates the rear side 32 (i.e., side that faces into the passenger section 121) in the closed position. The strike section 40 and the latch section 50 are aligned together in the closed position, such as in a coplanar alignment. This closed position occurs when the lock 30 is locked and the barrier door 20 is in the extended configuration.

Figure 5A illustrates the front side 31 of the lock 30 in an open position and Figure 5B illustrates the rear side 32 of the lock 30 in the open position. The strike section 40 and the latch section 50 are in a transverse orientation. For example, the transverse orientation may refer to the relative positioning of the strike section 40 and the latch section 50 of the lock 30 when they are not aligned in a coplanar or straight line configuration. Instead, the strike section 40 and the latch section 50 are positioned at an angle to each other, typically forming a non-linear or perpendicular arrangement. The extent of the angular alignment between the strike section 40 and latch section 50 can vary. The open position includes the front sides 41, 51 of the strike section 40 and latch section 50 facing generally together with the rear sides 42, 52 generally facing away from each other.

In some examples, the hinge 33 is mounted on the first side (e.g., the front side 31) of the lock 30 and configured to be accessible from the first side (e.g., from the crew section 124) and inaccessible from the second side (e.g., from the passenger section 121) when the barrier door 20 is in an extended configuration (also referred to unfolded configuration or deployed position). In some examples, the hinge 33 is mounted to the front side 31 of the lock 30. This exposes the hinge 33 to the crew section 124 when the barrier door 20 is in the deployed position. This prevents a passenger in the passenger section 121 from tampering with the hinge 33 when the barrier door 20 is in the deployed position.

The strike section 40 includes a body 49 with a front side 41, a rear side 42, and an inner face 48. A receptacle 43 extends into the inner face 48. The front side 41 can include a flange that extends over the panel 23. In some examples, the strike section 40 has a two-piece construction with a front section 44 and a rear section 45 that are in an overlapping configuration. The receptacle 43 is positioned at the intersection of the front section 44 and the rear section 45. Fasteners 160 extend through openings in each of the front section 44 and rear section 45 to connect the two sections together. In some examples, one or more fasteners 160 are mounted from each of the front side 31 and the rear side 32 of the lock 30. In other examples, fasteners 160 extend into the lock 30 from just the front side 31 to prevent tampering by a passenger when the lock is in the closed position. In some examples, the body 49 of the strike section 40 is configured to fit within the first panel 23a of the barrier door 20.

The latch section 50 includes a body 59 and has a front side 51 and a rear side 52. The body 59 includes an inner face 58 at the hinge 33. When the lock 30 is in the closed position, the inner faces 48, 58 face together (face to each other). That is, in the closed position, the inner face 48 of the strike section 40 and the inner face 58 of the latch section 50 are adjacent to each other such that both inner surfaces 48 and 58 face together. For example, the inner faces 48 and 58 are parallel to each other. In some examples, the inner faces 48, 58 abut together in closed position, with other examples including the faces 48, 58 spaced apart. The latch section 50 includes a handle 53. The handle 53 includes a front handle 54 at the front side 51 of the latch section 50 and a rear handle 55 at the rear side 52 of the latch section 50. In some examples, the handle is movable relative to the body 59 of the latch section 50. In some examples, the body 59 of the latch section 50 is configured to fit within the second panel 23b of the barrier door 20.

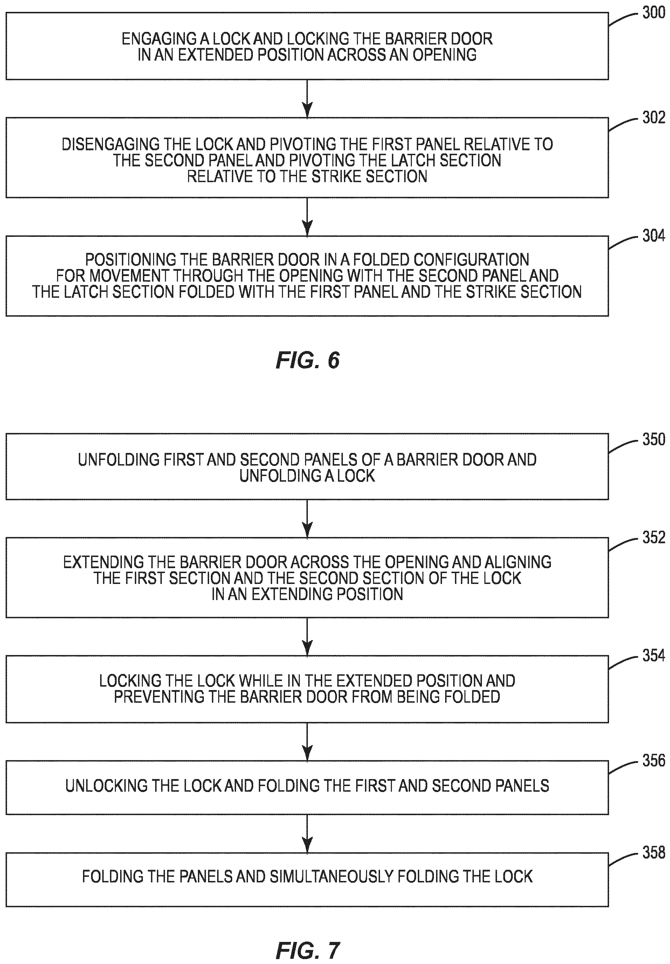

Figure 6 illustrates a method of operating a barrier door 20 (e.g., the barrier door 20 as defined above). The method includes engaging a lock 30 (e.g., the lock 30 as defined above) and locking the barrier door 20 in an extended position across an opening 113 (block 300). The lock 30 includes a latch section 50 on second panel 23 (for example, the second panel 23b) of the barrier door 20 and a strike section 40 on a first panel 23 (for example, the first panel 23a). At some point thereafter, the lock 30 is disengaged and the first panel 23 is pivoted relative to the second panel 23 and also pivoting the latch section 50 relative to the strike section 40 (block 302). The barrier door 20 is placed in a folded configuration to allow movement through the opening 113 and the second panel 23 and the latch section 50 are folded with the first panel 23 and the strike section 40 (block 304). In this method, the foldable nature of the lock 30 does not interfere with the folding action of the barrier door 20. Rather, the lock 30 folds with the panels 23 (23a, 23b) as the barrier door 20 is moved from the extended configuration to the folded configuration.

Another method in Figure 7 includes unfolding the first panel 23 (for example, the first panel 23a) and second panel 23 (for example, the second panel 23b) of a barrier door 20 and unfolding the lock 30 (block 350). The lock 30 includes a first section attached to the first panel 23 and a second section attached to the second panel 23. The barrier door 20 is extended across the opening 113 and aligning the first section and the second section of the lock 30 to an extended position (block 352). The method also includes locking the lock 30 while in the extended position and preventing the barrier door 20 from being folded (block 354). At some point thereafter, the method unlocks the lock 30 and the first panel 23 and the second panel 23 are folded (block 356). While folding the panel 23, the lock 30 is also folded (block 358).

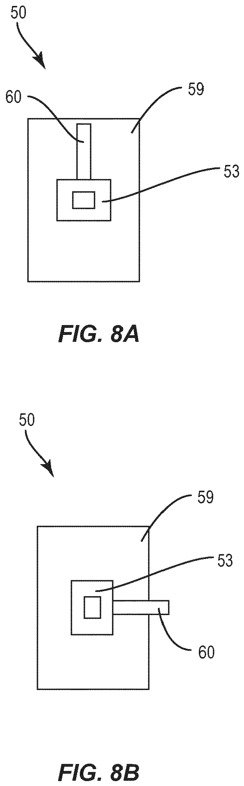

The lock 30 includes a rotary bolt 60 (also referred to as a bolt 60). The rotary bolt 60 is moved by rotation of the handle 53 between locked and unlocked positions. As schematically illustrated in Figures 8A and 8B, the rotary bolt 60 is mounted to the latch section 50 - that is, the latch section 50 comprises the rotary bolt 60. In some examples, the rotary bolt 60 is positioned within the perimeter of the body 59, with other examples being positioned at different arrangements. The rotary bolt 60 is movable between a disengaged position and an engaged position. In the disengaged position of Figure 8A, the rotary bolt 60 is positioned to be disengaged from the strike section 40. In some examples, this includes the rotary bolt 60 recessed within the perimeter of the body 59. In the engaged position of Figure 8B, the rotary bolt 60 is positioned to engage with the strike section 40. In some examples, the engaged position includes the rotary bolt 60 extending outward from the body 59 and positioned to be inserted into the strike section 40. That is, in some examples, in the closed position of the lock 30 (engaged position of the rotary bolt 60), the rotary bolt 60 extend outward from the inner face 58 of the latch section 50. The handle 53 is operatively connected to the rotary bolt 60 to rotate the rotary bolt 60 between the engaged and disengaged positions. For example, when the lock 30 (meaning the strike section 40 and the latch section 50) is in the closed position, the strike section 40 and the latch section 50 are aligned in a coplanar orientation, allowing the rotary bolt 60 to extend into the strike section 40 - engaged position of the rotary bolt 60. This engagement secures the lock 30, preventing the door panels 23 from pivoting and maintaining the barrier door 20 in its extended configuration across the opening 113. Conversely, when the lock 30 is in the open position, the rotary bolt 60 is retracted from the strike section 40 (disengaged position of the rotary bolt 60), allowing the strike section 40 and the latch section 50 to move into the transverse orientation.

The lock 30 is configured to be selectively movable between locked and unlocked positions by rotating the handle 53. The lock 30 is positioned to be locked when the strike section 40 and the latch section 50 are aligned in a substantially planar arrangement. Once aligned, the handle 53 is rotated to move the rotary bolt 60 from the disengaged position to the engaged position. To unlock the lock 30, the handle 53 is rotated to disengage the rotary bolt 60. Once unlocked, the panels 23 and the lock 30 can be folded and moved to enable persons to move through the opening 113.

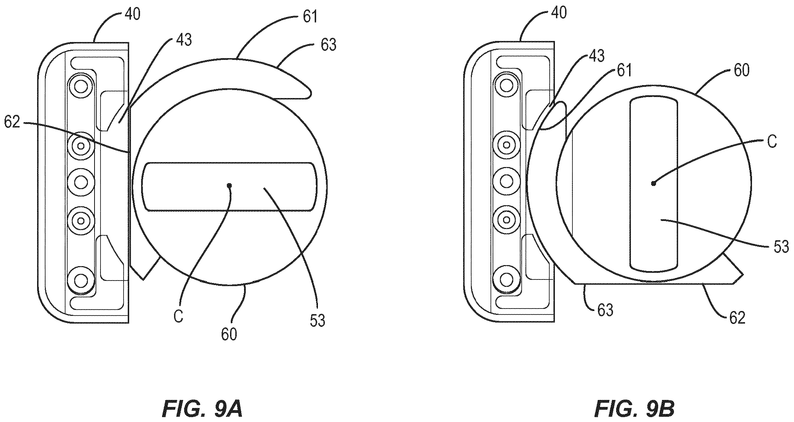

The rotary bolt 60 is rotatably mounted to the body 59 of the latch section 50. Figures 9A and 9B illustrate the rotary bolt 60 that rotates about a center point C and moves relative to the strike section 40. The rotary bolt 60 includes an outer perimeter 63 with an extension section 61 and a flat section 62. In the unlocked position as illustrated in Figure 9A, the rotary bolt 60 is in a rotational position with the flat section 62 positioned at the receptacle 43 of the strike section 40. The flat edge aligns with the edge of the receptacle 43 but does not extend into the receptacle 43. This is the unlocked position of the lock 30 as the rotary bolt 60 does not engage with the strike section 40.

In the locked position as illustrated in Figure 9B, the rotary bolt 60 is at a rotational position with the extension section 61 positioned at the receptacle 43. The larger radius measured from the center point C of the extension section 61 relative to the flat section 62 causes the extension section 61 to extend into the receptacle 43. This engagement locks the lock 30 and prevents pivoting of the hinge 33. This prevents the panels 23 likewise from folding and the opening of the barrier door 20. In the locked position the flat section 62 is positioned away from the receptacle 43.

The front handle 54 is directly connected to the rotary bolt 60. A rotational force applied by a user to the front handle 54 enables rotation of the rotary bolt 60 between the locked (engaged) and unlocked (disengaged) positions. This direct connection enables a crew member on the on the front side 21 of the barrier door 20 to rotate the front handle 54 and lock and/or unlock the lock 30. This enables the crew member to quickly lock the barrier door 20 in the event of an issue. This also enables a crew member to quickly unlock the barrier door 20 to access the passenger section 121.

The rear handle 55 is connected to the rotary bolt 60 through a delay assembly 140 that includes a cam member 70 and a lock bar assembly 80. This configuration delays unlocking the lock 30 from the passenger section 121 as rotation of the rear handle 55 to unlock the lock 30 is prevented until expiration of a time delay. Once the time delay has expired, the passenger is able to rotate the rear handle 55 and unlock the lock 30 and open the barrier door 20. This time delay provides time for the crew members to move into the flight deck 110 as needed and to close and lock the flight deck door 90.

As described below, when front handle 55 is rotated, the boss 64 travels along the slot 71 thus allowing the front handle 55 to rotate between locked and unlocked positions without contacting cam member 70, and by extension not moving rear handle 54. In some examples, the front handle 55 rotates a total of 90 degrees during operation. The rear handle 54, when permitted by the delay assembly 140 to rotate to the unlocked position, rotates an amount (e.g., 90 degrees) to make the boss 64 reach the end of slot 71. After this initial rotation, an additional amount of rotation (e.g., 90 degrees) rotates both handles together to the unlocked position. The rear handle 54 rotates both the initial and subsequent rotational amounts. In one example, the rear handle 54 rotates a total of 180 degrees during operation.

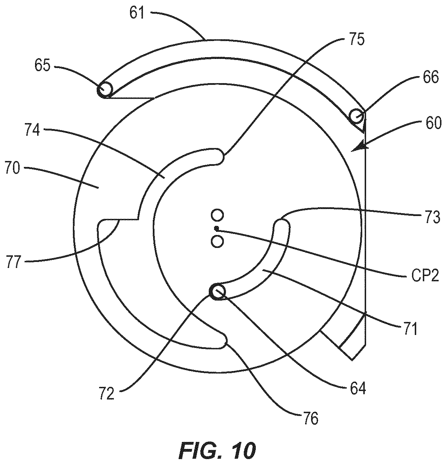

Figure 10 illustrates the cam member 70 positioned in an overlapping arrangement with the rotary bolt 60. The cam member 70 includes a center point CP2 that is aligned with a center point of the rotary bolt 60. Both components rotate about the same axis that extends through the center points. The cam member 70 includes a first slot 71 and a second slot 74. A boss 64 that extends from the rotary bolt 60 extends into the slot 71. In some examples, the cam member 70 is relatively flat, thin shape with an inner face that is aligned parallel with a face of the rotary bolt 60.

Slot 71 has a relatively uniform width along its length between the opposing ends 72, 73. The width corresponds to the width of the boss 64 to enable movement of the boss 64 between the ends 72, 73 during rotation of the rotary bolt 60. Slot 74 includes a first end 75 and a second end 76. The slot 74 includes a contact surface 77 positioned between the first end 75 and second 76. A width of the slot varies with a tapered shape between the end 76 and contact surface 77 and a substantially constant width between the contact surface 77 and the first end 75.

During rotation of the front handle 54 by a crew member, the rotary bolt 60 is rotated causing the boss 64 to move along the slot 71. This configuration enables locking and unlocking the lock 30 without delay. A lock bar assembly (not illustrated in Figure 10) is configured to engage with the cam member 70 and provide the time delay when unlocking the lock 30 using the rear handle 55.

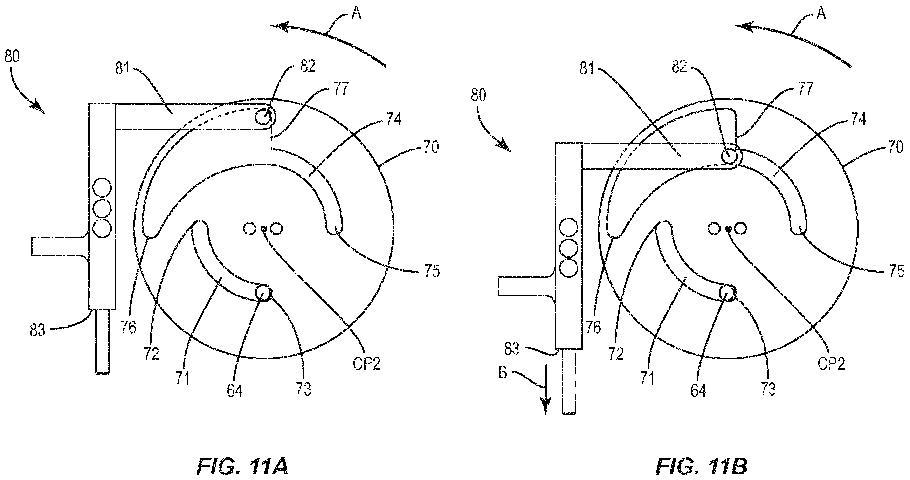

The lock bar assembly 80 is illustrated in Figures 11A and 11B (the rotary bolt 60 is not shown in these Figures). The lock bar assembly 80 includes a frame 81 that is positioned adjacent to the cam member 70. A boss 82 extends outward from the frame 81. The lock bar assembly 80 prevents rotation of the cam member 70 in the direction of arrow A because of the contact between the boss 82 and the contact surface 77. This in turn prevents rotation of the attached rotary bolt 60 and rear handle 55. This contact prevents the cam member 70 to be rotated to the unlocked position. To enable unlocking from the passenger side, the flight crew applies a force in the direction of arrow B to move the frame 81 and boss 82 downward relative to the cam member 70. As illustrated in Figure 11B, the force moves the boss 82 downward along the contact surface 77 and into alignment with the slot 74. Once aligned, the user is able to rotate the rear handle 55 and rotary bolt 60 as the boss 82 is able to move into slot 74. This rotation unlocks the lock 30.

The lock bar assembly 80 further includes a delay assembly 140 configured to delay the movement of the frame 81 downward to align the boss 82 with the slot 74 (and to unlock the lock 30). As illustrated in Figures 4B and 5B, the rear side 52 of the latch section 50 includes a button 56. The button 56 enables a user to apply a force (e.g., a downward force) to move the frame 81 relative to the cam member 70 and unlock the lock 30. The delay assembly 140 is configured for the user to apply the force for an extended time period to move the frame 81 downward. In one example, the user is required to apply the force for at least seven seconds to move the frame 81 to align the boss 82 with the slot 74.

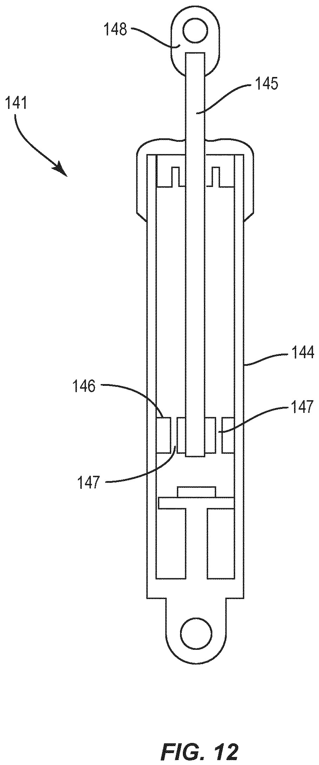

As illustrated in Figure 12, the delay assembly 140 includes one or more dampers 141. The dampers 141 include a cylinder 144 that holds a fluid. A piston 148 that includes a rod 145 and a head 146 is movable relative to the cylinder 144. Openings 147 in the head 146 provide for the fluid to pass through the head 146 during movement of the piston 148. The delay assembly 140 also includes springs 142, 143 that act on the frame 81 and/or damper 141.

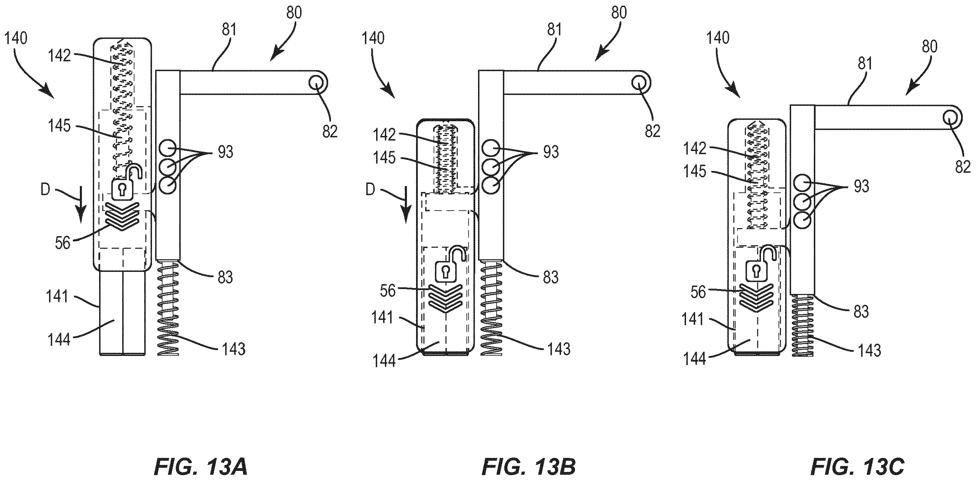

Figures 13A-13C illustrate the movement of the frame 81 and interaction of the delay assembly 140. The user applies a force D on the button 56 that is connected to the frame 81. This force causes the rod 145 to move into the cylinder 144. The movement is slowed due to the displacement of the fluid through the holes in the head 146 as the piston 148 moves into the cylinder 144. The frame 81 is connected to the piston 148 and moves downward as the piston 148 moves into the cylinder 144. After the user applies the force for a period of time, the piston 148 and the frame 81 move such that the boss 82 on the frame 81 aligns with the slot 74 in the engagement member (see Figure 11B). At this position, the rear handle 55 can be rotated by the user to unlock the lock 30. Once the lock 30 is unlocked, the user releases the button 56. The springs 142, 143 apply a force to move the piston 148 and attached frame 81 upward to the starting position (see Figure 11A).

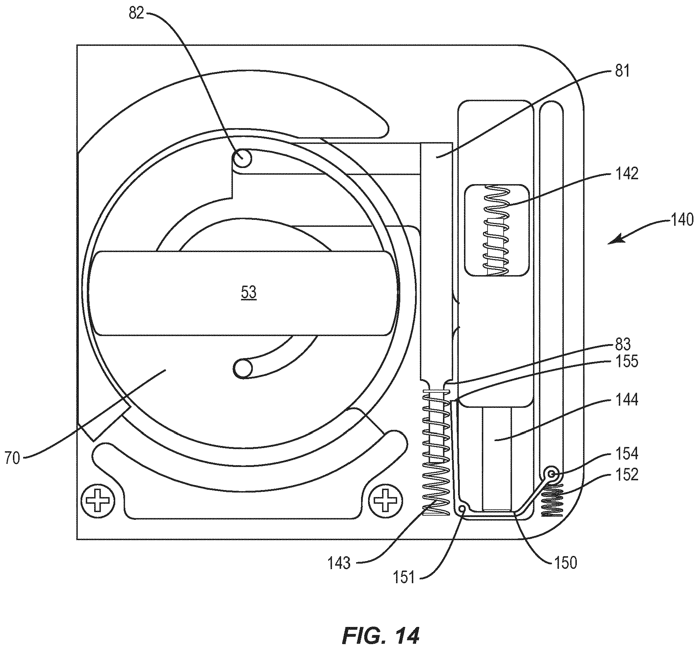

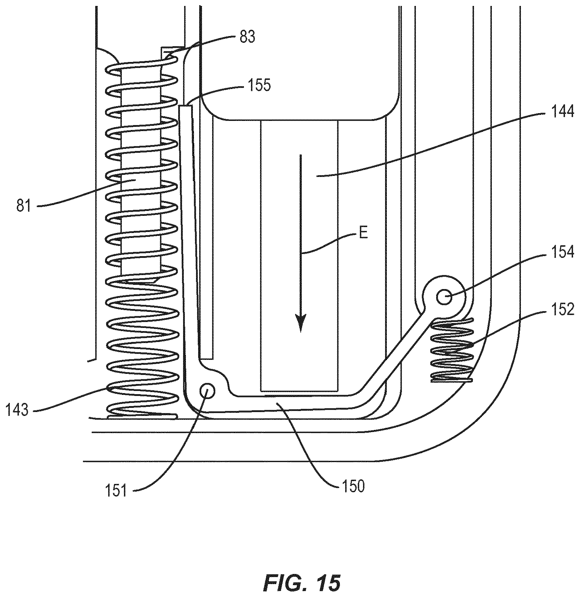

The delay assembly 140 includes a catch 150 configured to prevent the lock 30 from being unlocking the lock 30 in the event of failure of the damper 141. As illustrated in Figures 14 and 15, the delay assembly 140 includes a catch 150. The catch 150 is mounted adjacent to the lock bar assembly 80 and pivots about a pivot point 151. The catch 150 includes a substantially "L" shape with a first leg having a first end 154 and a second leg having a second end 155. A spring 152 applies a force (e.g., upward force) at the first end 154 to position the catch 150 at a first pivot position as illustrated in Figures 14 and 15.

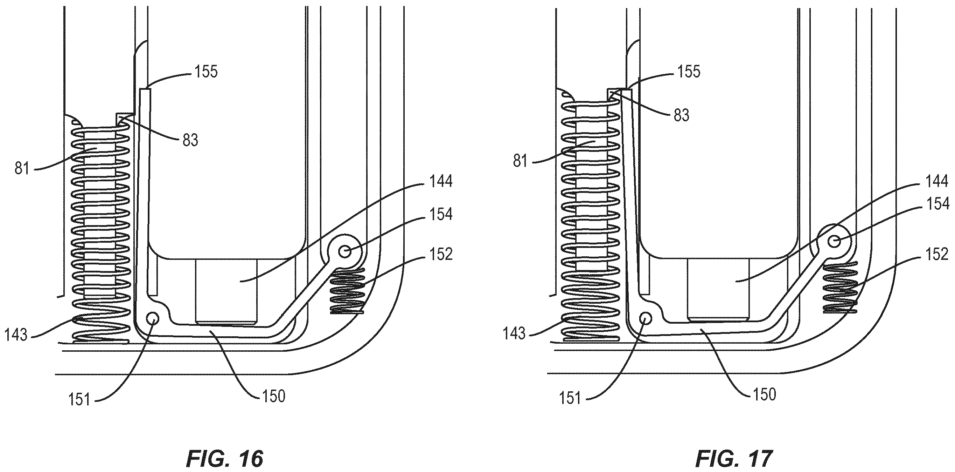

When the user applies a force to the button 56, the force is transferred to the damper 141. The damper 141 contacts the catch 150 along the first leg and causes the catch 150 to pivot about the pivot point 151 from the first position (Figure 15) to an open position as illustrated in Figure 16. The movement of the catch 150 compresses the spring 152 and causes the opposing end 155 to move away from the frame 81. This movement enables the frame 81 to move downward such that the boss 82 aligns with the slot 74 to allow for the handle to rotate and unlock the lock.

If the delay assembly 140 is not operating correctly, the force applied to the button 56 does not cause the cylinder 144 to move downward. This results in the catch 150 remaining in the first position. As illustrated in Figure 17, this causes the end 155 of the catch 150 to contact against the frame 81 as the user applies the force to the button 56. The contact with the end 155 prevents the frame 81 from moving downward beyond a predetermined point. This prevents the boss 82 from aligning with the slot 74 and therefore the rear handle 55 cannot be rotated and the lock 30 cannot be unlocked. In some examples, the contact between the catch 150 and the frame 81 occurs between the end 155 and a notch 83 in the frame 81.

In some examples as illustrated, the spring 152 is a compression spring that is positioned under the end 154. In other examples, the spring 152 is an extension spring positioned above the end 154 and which applies an upward force to the end 154.

The lock 30 is also configured to be unlocked in the event of failure of the other locking components. For example, in the event the rotary bolt 60 fails to move from the locked position to the unlocked position. As illustrated in Figures 4A, 4B, fasteners 160 are mounted to the strike section 40 to secure the front section 44 and the rear section 45 together. One or more of the fasteners 160 are inserted from the front side 41 of the strike section 40 and one or more fasteners 160 are inserted from the rear side 42 of the strike section 40. The example of Figures 4A and 4B include two fasteners inserted from the front side 41 and three fasteners 160 inserted from the rear side 42.

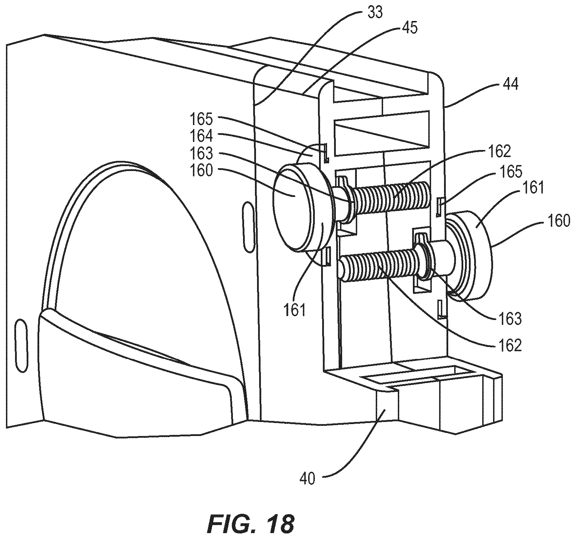

Figure 18 illustrates a cut-away view of a strike section 40 to illustrate fasteners 160 mounted from each direction. The fasteners 160 include an enlarged head 161 and a threaded shaft 162. In the event of failure of the rotary bolt 60 to unlock, the threaded fasteners 160 can be removed and/or loosened to separate the front section 44 and rear section 45. This enlarges the size of the receptacle 43 and provides for the rotary bolt 60 to be removed from the receptacle 43 and to open the lock 30. The fasteners 160 are configured to be rotated multiple times to loosen the front section 44 and rear section 45. The rotation of the fasteners 160 causes a time delay such that the user is not able to immediately unlock the lock 30 and then open the barrier door 20.

In some examples, the fasteners 160 include retaining rings 163 positioned on the threaded shafts 162. The retaining rings 163 are configured to bind the threaded shaft 162 after a number of rotations. This requires the user to sequentially rotate each of the fasteners 160 a limited amount such that the fasteners 160 are loosened in equal discrete amounts. For example, the first fastener 160 is unscrewed three rotations, followed by the second fastener 160 unscrewed three rotations, followed by the third fastener 160 unscrewed three rotations. This sequential rotation of the fasteners 160 keeps the retaining rings 163 aligned relative to their respective threaded shafts 162. Once the first set of rotations is complete, the fasteners 160 are again sequentially rotated to unscrew additional limited amounts. This sequential rotation requirement further increases the amount of time for a user to open the lock 30 and open the barrier door 20.

In some examples, the fasteners 160 also include flanges 164 that extend radially outward beyond the head 161 and threaded shaft 162. The face of the strike section 40 where the fasteners 160 are mounted includes a colored indicator 165. When the fastener 160 is fully tightened, the flange 164 extends over and visually obscures the colored indicator 165. When the fastener 160 is unscrewed, the flange 164 on the fastener 160 moves away from the colored indicator 165 thus causing the colored indicator 165 to become visible. This enables a person to quickly view the lock 30 and determine if it has been tampered with and/or the fasteners 160 unscrewed. For example, during flight a crew member walking through the opening 113 can view the lock 30 to determine if there has been tampering.

In other examples, the fasteners 160 include a groove under the head 161. A color indicator 165 is positioned in the groove. The color indicator 165 is positioned sub-flush to the surface of the strike body 49. Movement of the fasteners 160 such as being unscrewed results in the color indicator 165 being visible.

The lock 30 is configured with visual indicators to visually display whether the lock 30 is unlocked or locked. As illustrated in Figures 4A and 4B, both of the front side 31 and the rear side 32 include one or more windows that indicate the status. Figure 4A illustrates the front side 31 of the lock 30 with two indicators 34, 35. Figure 4B illustrates the rear side 32 of the lock 30 which includes windows 36, 37. The number of windows and positioning on the lock 30 can vary.

The rotary bolt 60 includes indicators that align with the windows based on the rotational position. In one example illustrated in Figure 10, the rotary bolt 60 includes a first indicator 65 that has a first color (e.g., green) and a second indicator 66 that has a different second color (e.g., red). When the rotary bolt 60 is in an unlocked position, one of the indicators 65, 66 is aligned with one of the windows to visually indicator the position. Likewise, when the rotary bolt is in a locked position, the other of the indicators is aligned with one of the windows. In one example, the green indicator is aligned with a window when the lock 30 is locked, and a red indicator is aligned with a window when the lock 30 is unlocked. Figure 10 illustrates indicators 65, 66 on a first side of the rotary bolt 60. This provides for a visual indication to one side of the lock 30 (e.g., the front side 31 or the rear side 32). In some examples, indicators are also positioned on the other side of the rotary bolt 60 to align with windows on the other side of the lock 30. In some examples, the indicators and windows are the same on both the front side 31 and rear side 32. Other examples include different windows and/or indicators on the two sides 31, 32.

The time delay component can also include a visual indicator. In one example, the time delay indicator is only visible on the rear side 32 of the lock 30. As illustrated in Figure 4B, a window 37 is positioned on the rear side 32 of the lock 30. In some examples, the time delay window 37 is positioned in closer proximity to the button 56 to provide a visual clue to the user. As illustrated in Figures 13-13C, the frame 81 of the lock bar assembly 80 includes indicators 93 aligned in a vertical row. Each of the indicators has a different visual appearance, such as a different color. During use when the user is applying a force to the button 56 and the frame 81 is slowly moving, the different indicators 93 align with and are visible in the window 37. This provides a visual indication to the user about the time remaining until the lock 30 can be unlocked. In one example, the first indicator 93 is red indicating the locked position, the second indicator is yellow indicating the frame 81 is moving, and the third indicator is green indicating the lock 30 is able to be unlocked. In another example, the indicator includes three circles with different amounts of the circle filled. The amount of fill within the circle indicates the amount of remaining time until the lock 30 can be unlocked.

The barrier door 20 can be mounted in the cabin area 103 in a variety of different manners. The barrier door 20 can be mounted to one or more of the monuments 112, floor, and ceiling. In some examples, the barrier door 20 is mounted to just the floor and/or ceiling of the cabin area 103. The barrier door 20 is not mounted to the monuments 112.. In some examples, this mounting provides for a barrier door 20 to be installed on existing aircraft 100 without changing the monuments 112.

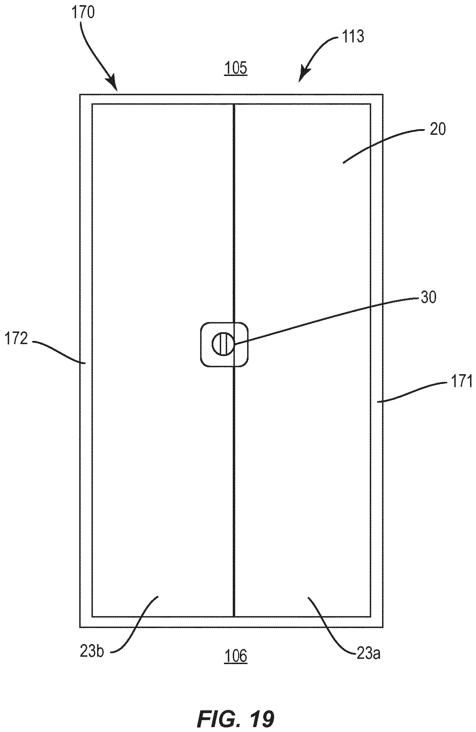

In some examples as illustrated in Figure 19, the barrier door 20 is part of a door assembly 170. The door assembly 170 includes the barrier door 20 with the lock 30 and a frame 171. A hinge 172 connects the barrier door 20 to the frame 171 and enables for pivoting movement relative to the opening 113. The barrier door 20 mounted in a frame that is mounted at the opening 113. In some examples as illustrated in Figure 19, the frame 171 extends completely around the barrier door 20. In other examples, the frame 171 extends around a limited portion of the barrier door 20. In one example, the frame 171 extends around a single side of the barrier door 20, such as a threshold that connects to the floor 106, and a pair of opposing sides that extend along the lateral sides of the barrier door 20. In some examples, the frame 171 is connected to the ceiling 105.

In some examples, the barrier door 20 is arranged to move between the folded and extended configurations in a certain direction. This provides for structural stability in the event that a passenger applies pressure to the door from the passenger section 121. In one example, the panels 23 fold towards the passenger section when moving from the deployed position to the deployed position.

As illustrated in Figure 3A, the barrier door 20 is positioned completely out of the opening 113 when in the stowed position. This protects the panels 23 from being damaged such as by being hit by luggage carried by passengers, galley carts being pushed through the opening 113, and persons as they walk through the opening 113. In other examples, the barrier door 20 is partially within the opening 113 in the stowed position.

The barrier door 20 includes multiple panels 23 that are connected together by hinges. In some examples, the barrier door 20 includes two panels 23 (for example, the first panel 23a and the second panel 23b) that are connected along inner edges by a hinge 25. In other examples, the barrier door 20 includes three or more panels 23 that are connected by hinges 25.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A lock (30) for a multiple panel door (20) with a first panel (23a) and a second panel (23b) that are pivotally connected together, the lock (30) comprising:
a strike section (40) configured to be mounted to the first panel (23a);
a latch section (50) configured to be mounted to the second panel (23b), the latch section (50) selectively movable between an unlocked position that is away from the strike section (40) and a locked position that is engaged with the strike section (40);
a hinge (33) that pivotally connects the strike section (40) and the latch section (50); and
wherein the strike section (40) and the latch section (50) are selectively movable about the hinge (33) to enable relative pivoting movement between the first panel (23a) and the second panel (23b).

2. The lock (30) of claim 1, wherein the strike section (40) and the latch section (50) are relatively movable between a closed position and an open position with the closed position comprising the strike section (40) and the latch section (50) aligned in a coplanar orientation and the open position comprising the strike section (40) and the latch section (50) aligned at a transverse orientation.

3. The lock (30) of claim 1 or 2, wherein the strike section (40) and the latch section (50) are relatively movable between a closed position and an open position;
wherein each of the strike section (40) and the latch section (50) comprise a respective inner face (48, 58);
wherein the inner face (48) of the strike section (40) and the inner face (58) of the latch section (50) are configured to face together in the closed position; and
wherein the inner face (48) of the strike section (40) and the inner face (58) of the latch section (50) are configured to be spaced apart in the open position.

4. The lock (30) of claim 3, wherein the latch section (50) comprises a bolt (60); and
wherein in the closed position, the bolt (60) is configured to extend outward from the inner face (58) of the latch section (50).

5. The lock (30) of claim 4, wherein the latch section (50) comprises a body (59);
wherein the lock (30) further comprises a handle (53) positioned on the latch section (50) with the handle (53) movable relative to a body (59) of the latch section (50), wherein the handle (53) is configured to control the position of the bolt (60).

6. The lock (30) of claim 5, wherein the latch section (50) comprises a front side (51) and a rear side (52);
wherein the handle (53) comprises a front handle (54) and a rear handle (55) with the front handle (54) exposed on the front side (51) of the latch section (50) and the rear handle (55) exposed on the rear side (52) of the latch section (50).

7. The lock (30) of any one of claims 1 to 6, wherein the hinge (33) is configured to enable the strike section (40) to pivot in one direction relative to the latch section (50) forward of the latch section (50) and to prevent the strike section (40) to pivot in another direction relative to the latch section (50) rearward of the latch section (50).

8. The lock (30) of any one of claims 1 to 7, wherein the lock (30) comprises a first side (31) that faces outward from the panel door (20) in a first direction, and a second side (32) that faces outward from the panel door (20) in an opposing second direction,
wherein the hinge (33) is mounted on the first side (31) of the lock (30) and configured to be accessible from the first side (31) and inaccessible from the second side (32) when the panel door (20) is in an extended configuration.

9. The lock (30) of any one of claims 1 to 8, wherein the lock (30) is configured to be mounted within an aircraft (100).

10. The lock (30) of any one of claims 1 to 9, when implemented into the panel door (20), the panel door (20) comprising a door hinge (25) configured to pivot the first panel (23a) and the second panel (23b);
wherein the door hinge (25) and the hinge (33) of the lock (30) are aligned to form a straight line.

11. The lock (30) of any one of claims 1 to 10, wherein each of the strike section (40) and the latch section (50) comprise a respective body (49, 59);
wherein, when the lock (30) is implemented into the panel door (20), the body (49) of the strike section (40) is configured to fit within the first panel (23a) of the panel door (20), and the body (59) of the latch section (50) is configured to fit within the second panel (23b).

12. A method of operating a multiple panel door (20) comprising pivotally connected a first panel (23a) and a second panel (23b), and a lock (30) according to claim 1, the method comprising:
engaging the lock (30) and locking the door (20) in an extended configuration across an opening (113) with the latch section (50) of the lock (30) on the second panel (23b) and the strike section (40) of the lock (30) on the first panel (23a) of the door 20;
disengaging the lock (30) and pivoting the first panel (23a) relative to the second panel (23b) and pivoting the latch section (50) relative to the strike section (40); and
folding the panel door (20) to a folded configuration with the second panel (23b) and the latch section (50) folded with the first panel (23a) and the strike section (40).

13. The method of claim 12, wherein disengaging the lock (30) comprises:
turning a handle (53) on the latch section (50) and rotating a bolt (60) out of a receptacle (43) in the strike section (40).

14. The method of claim 12 or 13, further comprising:
aligning the strike section (40) and the latch section (50) in a coplanar orientation with the panel door (20) in the extended configuration.

15. The method of any one of claims 12 to 14, further comprising:
aligning the strike section (40) and the latch section (50) in a transverse orientation with the panel door (20) in the folded configuration.
